# EUROPEAN PATENT APPLICATION

(11) **EP 4 060 644 A1**
(43) Date of publication of application: **21.09.2022**
(21) Application number: 22156180.6
(22) Date of filing: 10.02.2022
(51) Int. Cl.: G09B 7/00

(54) **CHARACTER INPUT DEVICE, CHARACTER INPUT METHOD, AND CHARACTER INPUT PROGRAM**

(30) Priority: 15.03.2021 JP 2021041280; 23.08.2021 JP 2021135719
(71) Applicant: OMRON Corporation, Shiokoji-dori, Shimogyo-Ku Kyoto-shi Kyoto 600-8530 (JP)
(72) Inventor: ICHIKAWA, Kei, Kyoto, 604-8152 (JP); HIGUCHI, Yosuke, Kyoto, 604-8152 (JP); YAMAUCHI, Mieko, Kyoto, 604-8152 (JP); NAKAMURA, Tetsuya, Kyoto, 604-8152 (JP)
(74) Representative: Horn Kleimann Waitzhofer Patentanwälte PartG mbB

(57) **Abstract**

According to the present invention, it is possible to conduct an examination capable of appropriately checking the degree of understanding of a user, without reducing the efficiency of learning or report creation. An extraction unit extracts candidates including predictive candidates, as candidates corresponding to an input character string. A control vocabulary storage unit stores a control vocabulary to be learned with teaching material. A determination unit determines whether a usage mode is a first mode or a second mode. An output control unit outputs the candidates in an arrangement order according to priority. When the usage mode is the first mode, the output control unit excludes, from the candidates to be output, any words in the control vocabulary extracted as predictive candidates. Also, when the usage mode is the second mode, the output control unit increases the priority of any words in the control vocabulary extracted by the extraction unit as predictive candidates, among the candidates to be output.

## Description

### CROSS-REFERENCES TO RELATED APPLICATIONS

This application claims priority to Japanese Patent Application No. 2021-041280 filed March 15, 2021, the entire contents of which are incorporated herein by reference.

### FIELD

The present invention relates to a technique for supporting a character input operation performed by a user in learning with digital teaching material and in an examination conducted to check the degree of understanding of the learning.

### BACKGROUND

Many digital teaching materials for increasing the knowledge, and ability, and the like of users (learners) have been widely used. JP 2018-59973A discloses a system in which a user answers questions using a tablet type portable information terminal or a stationary personal computer.

JP 2018-59973A is an example of background art.

### SUMMARY

However, in the configuration of Patent Document 1, when a character conversion function of a terminal (a tablet or a personal computer) that a user uses in an examination conducted for checking the degree of understanding of the user is used, the correct answer to a question for an examination may be displayed (output) as a predicted conversion candidate. In this case, the degree of understanding of the user cannot be checked as appropriate.

As is well known, predictive conversion is a function for increasing the convenience of the character input operation performed by a user. A user cannot efficiently perform learning, report creation (essay writing), or the like unless the predictive conversion candidates are output at the time of learning, report creation, or the like.

Therefore, an object of the present invention is to provide a technique capable of conducting an examination capable of appropriately checking the degree of understanding of a user, without reducing efficiency of learning or report creation.

In order to achieve the above object, a character input device of the present invention includes the following configuration.

An extraction unit extracts candidates including predictive candidates predicted based on an input character string corresponding to the input character string. A predictive candidate is a candidate with which an input character string input at that point in time is forward-matched and not completely matched. Also, a candidate with which an input character string input at that point in time completely matches is referred to as a regular candidate.

An output control unit outputs the candidates extracted by the extraction unit in an arrangement order according to priority. The output control unit arranges the candidates extracted by the extraction unit in descending order of the priority and outputs the arranged candidates, for example.

A control vocabulary storage unit stores a control vocabulary to be learned with teaching material.

A determination unit determines whether a usage mode is a first mode or a second mode. When the usage mode is the first mode, the output control unit excludes, from the candidates to be output, words in the control vocabulary extracted as predictive candidates. In contrast, when the usage mode is the second mode, the output control unit increases the priority of the words in the control vocabulary extracted by the extraction unit as predictive candidates, among the candidates to be output.

In this configuration, for example, the first mode is a usage mode for the purpose of checking the degree of understanding of a user (for example, a usage mode for conducting an examination on the user) , and the second mode is a usage mode for the purpose of ensuring the convenience of a character input operation performed by a user (for example, a usage mode for a user who is learning or creating a report). With this configuration, it is possible to conduct an examination in which the degree of understanding of a user can be appropriately checked, without reducing the efficiency of learning and report creation of the user.

Also, for example, the character input device can be connected to a plurality of terminals via a network, by additionally including a communication unit that receives an input character string and transmits predictive candidates. As a result, services such as learning with digital teaching materials, creating reports, and conducting an examination to check the degree of understanding (learning progress) can be provided to many users via a network.

Furthermore, for example, when the usage mode is the first mode, a grading unit that grades an input answer may be additionally provided. According to this configuration, it is possible to grade an examination conducted for checking the degree of understanding of a user, without manual operation.

The output control unit may calculate, for example, weights according to the type of the control vocabulary, and determine the priority of the control vocabulary extracted as predictive candidate by the extraction unit in consideration of the weights. According to this configuration, the display order of the predictive candidates when the user is learning can be determined in accordance with the actual learning environment (subject, language, etc.).

According to the present invention, it is possible to conduct an examination capable of appropriately checking the degree of understanding of a user, without reducing the efficiency of learning or report creation.

### BRIEF DESCRIPTION OF THE DRAWINGS

FIG. 1 is a schematic diagram showing a network system using a digital teaching material in this example.
FIG. 2 is a block diagram showing a configuration of the main parts of a server device in this example.
FIG. 3 is a block diagram showing a configuration of the main parts of a user terminal in this example.
FIG. 4 is an image diagram of a display at the time of conducting an examination on the user terminal in this example.
FIG. 5 is an image diagram of a display at the time when a user is learning using the user terminal in this example.
FIG. 6 is a flowchart showing the flow of processing for generating a control vocabulary in this example.
FIG. 7 is a flowchart showing the flow of processing in which the server device in this example generates and outputs conversion candidates.
FIG. 8 is a flowchart showing the flow of processing when the user terminal in this example is in an examination mode.
FIG. 9 is a flowchart showing the flow of processing when the user terminal in this example is in a learning mode.

### DETAILED DESCRIPTION

Hereinafter, an embodiment of the present invention will be described with reference to the drawings.

### 1. Application example

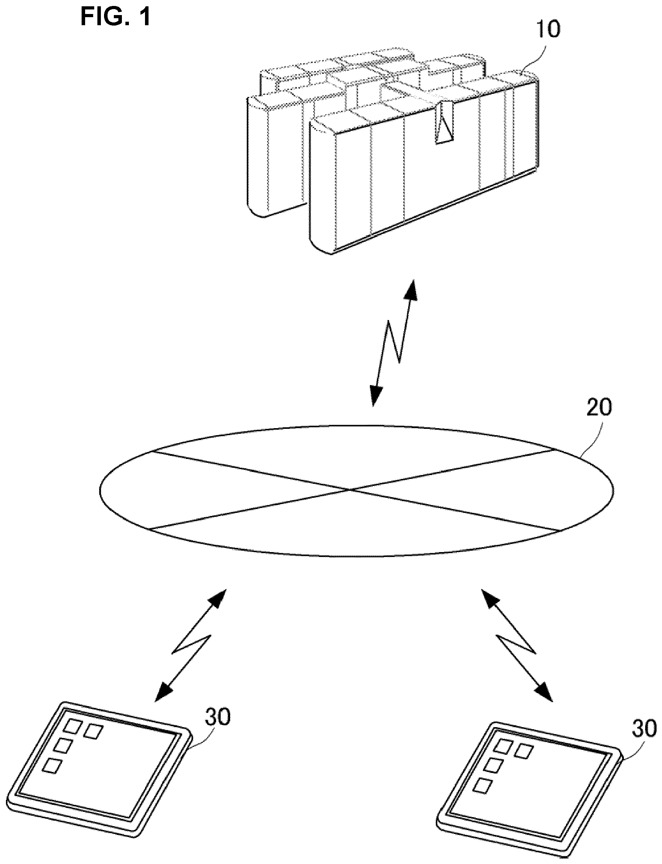

FIG. 1 is a schematic diagram showing a network system using digital teaching material. In this network system, as shown in FIG. 1, a plurality of user terminals 30 are connected to a server device 10 via a network 20. The server device 10 can perform data communication with the user terminals 30 connected via the network 20.

Each of the user terminals 30 is a personal computer or a tablet terminal that a user operates. The server device 10 distributes, to the user terminals 30, digital teaching material that the users use for learning, a work assignment of preparing a report to be submitted by the users, questions for an examination to be answered by the users, and the like. The user terminals 30 display the contents of the digital teaching material, the work assignment of the report, the questions for the examination, and the like that have been distributed from the server device 10 on their displays. The user performs an operation of inputting characters on his/her user terminal 30. The user terminal 30 performs character input processing according to the input operation performed by the user, in cooperation with the server device 10.

As is well known, a character input operation includes a method in which a user inputs phonetic notations of a word that the user intends to input as a character string (desired character string), and a method in which a user inputs a spelling of a word that the user intends to input as a character string, depending on the type of language. Japanese and Chinese are languages for which a user inputs phonetic notations (kana-characters, pinyin) of a word that the user intends to input as a character string, for example. In contrast, for example, English and German are languages for which a user inputs a spelling of a word that the user intends to input as a character string. In this example, a case where the language is Japanese will be described.

Furthermore, in this example, a predictive conversion candidate and a regular conversion candidate are collectively referred to as "conversion candidate" (corresponding to "candidate" referred to in this invention). A predictive conversion candidate (corresponding to a predictive candidate in the present invention) is a conversion candidate whose reading is forward-matched with the input character string, but is not completely matched with the input character string. A regular conversion candidate is a conversion candidate whose reading completely matches with the input character string.

The user terminal 30 transmits, to the server device 10, a report created by the user, answers input by the user to the questions for the examination, and the like. The server device 10 grades the answers input by the user to the questions for the examination.

The input character string may be composed of any number of characters, as long as it is composed of one or more characters.

In this example, the character input device according to the present invention is applied to the server device 10.

### Generation of control vocabulary

The server device 10 analyzes textbooks and questions for an examination that are prepared by the creator of the questions and the exercises, and the answers to those questions (hereinafter, these are collectively referred to as "text data"). More specifically, the server device 10 performs morphological analysis of the text data, and extracts a vocabulary (e.g. a collection of words) in units of parts of speech such as nouns, verbs, and adjectives. The server device 10 stores, as a control vocabulary, a vocabulary (words) related to the questions and the exercises within the extracted vocabulary in a control vocabulary database. Because morphological analysis performed by the server device 10 is a known process, a detailed description thereof will be omitted.

The server device 10 may store the control vocabulary in the control vocabulary database at a timing at which the text data is registered, or may also store the control vocabulary in the control vocabulary database at a timing (real time) at which the digital teaching materials, the work assignment of the report, the questions for the examination, or the like are distributed to the user terminal 30. Also, the server device 10 may also store the control vocabulary in the control vocabulary database at a timing other than the above-described timings.

The server device 10 stores, in the control vocabulary database, for example " 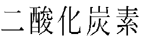 " (English translation: carbon dioxide), " 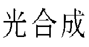 " (English translation: photosynthesis), " 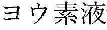 " (English translation: iodine solution), " 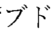
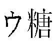 " (English translation: glucose), which have been extracted from the text data related to " 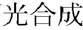 " of biology, as the control vocabulary, for example.

### Operation performed at the time when a user answers the questions for an examination

The server device 10 distributes questions for an examination to the user terminal 30 via the network 20. Here, a case where the server device 10 distributes questions for an examination of biology to the user terminal 30 will be described as an example. A usage mode in which a user answers the questions is referred to as "examination mode". The examination mode corresponds to a first mode in the present invention.

When distributing the questions to the user terminal 30, the server device 10 sets the usage mode to the examination mode. Upon receiving an input character string from the user terminal 30, the server device 10 outputs (transmits), to the user terminal 30, conversion candidates corresponding to the input character string. The server device 10 extracts regular conversion candidates and predictive conversion candidates corresponding to the input character string. The server device 10 excludes the words in the control vocabulary from the extracted predictive conversion candidates. The server device 10 outputs, to the user terminal 30, the regular conversion candidates, and the predictive conversion candidates from which any words in the control vocabulary have been excluded. Therefore, the control vocabulary corresponding to the correct answer to the question is not output to the user terminal 30 as a predictive conversion candidate, when the server device 10 is in the examination mode. However, even when the server device 10 is in the examination mode, words in the control vocabulary corresponding to the correct answer to the question are output to the user terminal 30, if they are regular conversion candidates.

Here, in the following description, it is assumed that the user considers the answer to the question displayed on his/her user terminal 30 to be " 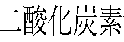 " (English translation: carbon dioxide, Japanese reading: ni-sa-n-ka-ta-n-so, Japanese notation in kana characters: 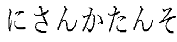 ).

The user operates the user terminal 30, and inputs the reading of " 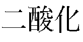 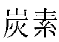 ", which the user considers to be the correct answer. Specifically, the user operates the user terminal 30, and inputs " 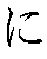 ", " 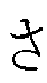 ", " 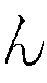 " , " 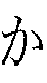 ", " 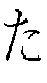 ", " 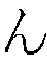 " , and " 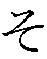 " in this order.

Each time the user inputs one character, the user terminal 30 transmits, to the server device 10, a character string input at that point in time as an input character string. When the user inputs " 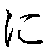 " to the user terminal 30, the user terminal 30 transmits " 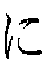 " as an input character to the server device 10. Then, when the user inputs " 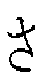 " to the user terminal 30, the user terminal 30 transmits " 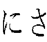 " as an input character string to the server device 10. Furthermore, when the user inputs " 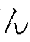 " to the user terminal 30, the user terminal 30 transmits " 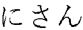 " as an input character string to the server device 10. Thereafter, each time the user inputs one character (" 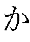 ", " 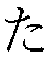 ", " 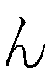 ", and " 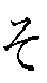 ") to the user terminal 30, the user terminal 30 similarly transmits the character string input at that point in time to the server device 10 as an input character string.

Each time an input character string is received from the user terminal 30, the server device 10 extracts conversion candidates corresponding to the input character string. As described above, conversion candidates include regular conversion candidates and predictive conversion candidates. Because the server device 10 is in the examination mode, words from the control vocabulary are excluded from predictive conversion candidates. The server device 10 outputs, to the user terminal 30, regular conversion candidates, as well as predictive conversion candidates from which the words in the control vocabulary have been excluded, as conversion candidates.

When the input character string that has been received from the user terminal 30 is " 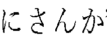 ", for example, the server device 10 extracts " 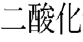 ", " 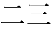 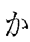 ", " 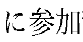 ", " 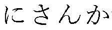 ", "nisanka" (the Japanese reading of all these words is the same; "ni-sa-n-ka") ,and the like, as regular conversion candidates, and extracts " 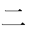 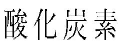 " (English translation: carbon dioxide), " 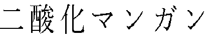 " (English translation: manganese dioxide), " 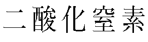 " (English translation: nitrogen dioxide), " 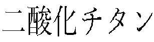 " (English translation: titanium dioxide), and the like, as predictive conversion candidates. " 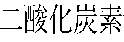 " and " 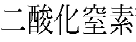 " are stored as part of the control vocabulary in the control vocabulary database. The server device 10 therefore excludes " 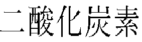 " and " 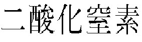 ", which are part of the control vocabulary, from the extracted predictive conversion candidates. The server device 10 transmits, to the user terminal 30, " 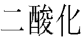 ", " 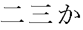 ", " 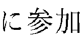 ", " 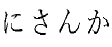 ", "nisanka", which are regular conversion candidates, and " 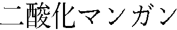 ", " 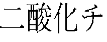 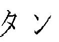 ", which are predictive conversion candidates and are not in the control vocabulary, as conversion candidates.

Also, when the input character string that has been received from the user terminal 30 is " 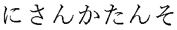 ", the server device 10 extracts " 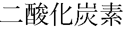 ", " 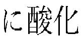 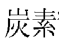 ", " 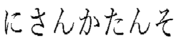 ", "nisankatanso" (the Japanese reading of all these words is the same; "ni-sa-n-ka-ta-n-so"), and so on as regular conversion candidates. The server device 10 has " 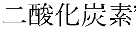 " stored in the control vocabulary database as a word in the control vocabulary, but extracts " 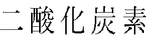 " as a regular candidate. Accordingly, the server device 10 transmits " 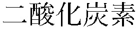 ", " 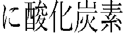 ", " 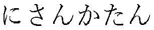 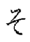 ", "nisankatanso", and so on to the user terminal 30 as conversion candidates. At this time, in a case where the server device 10 has extracted predictive conversion candidates, the server device 10 transmits, to the user terminal 30, conversion candidates that are extracted predictive conversion candidates, but are not the words in the control vocabulary.

The user operates his/her user terminal 30, and selects, from the conversion candidates, " 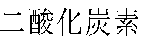 ", which the user considers to be the correct answer to the question. The user decides (i.e. enters) that the answer to the question is " 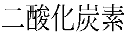 ". Then, the user operates the user terminal 30, and transmits, to the server device 10, the answer to the question, which the user entered as the final answer.

Note, that the user can correct an answer entered preliminarily as the final answer, if the answer has not yet been transmitted to the server device 10. Specifically, the user can delete the character string (for example, " 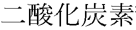 ") that has been input in the answer field, and then input the reading of a another word or words that the user considers to be the correct answer to the question as described above.

Upon receiving the answer to the question from the user terminal 30, the server device 10 determines whether the received answer is the correct answer or an incorrect answer, and grades the answer.

When the examination includes a plurality of questions, the user terminal 30 may transmit an answer to each question to the server device 10, or may also collectively transmit all answers to the questions to the server device 10.

In this manner, in the examination mode in which the user answers questions in an examination, the server device 10 does not present, to the user who is operating the user terminal 30, the correct answer or words corresponding to the correct answer as predictive conversion candidates. In this manner, it is possible to conduct an examination capable of appropriately checking the degree of understanding of a user.

### Operation performed at the time when a user is learning

The server device 10 distributes digital teaching material, a work assignment of preparing a report, or the like to the user terminal 30 via the network 20. The server device 10 distributes, for example, digital teaching material of biology, a work assignment of preparing a report, or the like to the user terminal 30. Ausage mode in which a user is learning is referred to as "learning mode". The learning mode corresponds to a second mode in the present invention.

The server device 10 sets the usage mode to the learning mode, when distributing digital teaching material, the work assignment of preparing a report, and the like to the user terminal 30. Upon receiving an input character string from the user terminal 30, the server device 10 outputs (transmits), to the user terminal 30, conversion candidates corresponding to the input character string. At this time, unlike a case where the server device 10 is in the examination mode, the server device 10 that is set to the learning mode does not exclude words in the control vocabulary from predictive conversion candidates corresponding to the input character string. The server device 10 that is set to the learning mode increases the priority of words in the control vocabulary.

When the input character string that has been received from the user terminal 30 is " 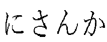 ", for example, the server device 10 in the learning mode extracts " 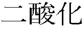 ", " 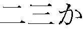 ", " 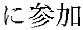 ", " 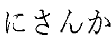 ", "nisanka", and the like as regular conversion candidates, and extracts " 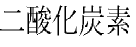 ", " 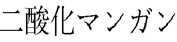 ", " 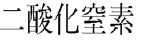 ", " 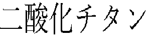 ", and the like as predictive conversion candidates. Although " 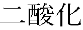 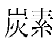 " and " 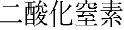 " are stored in the control vocabulary database as the words in the control vocabulary, the server device 10 does not exclude " 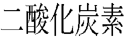 " and " 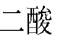 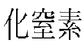 ", which are the words in the control vocabulary, from the extracted predictive conversion candidates. The server device 10 increases the priority of " 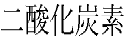 " and " 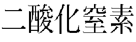 , which are the words in the control vocabulary. The server device 10 arranges conversion candidates in descending order of priority, and transmits the conversion candidates to the user terminal 30.

The user operates the user terminal 30, and selects a word or phrase from among the displayed conversion candidates.

With this configuration, when the user is learning, the server device 10 can display, on the user terminal 30, a character string included in the control vocabulary, at a high position in the conversion candidates. In this manner, the user can efficiently input characters at the time of learning or creating a report. That is to say, the efficiency of learning and report creation does not decrease.

Furthermore, because it is not necessary for the user to switch the usage mode, convenience is not reduced.

### 2. Configuration example

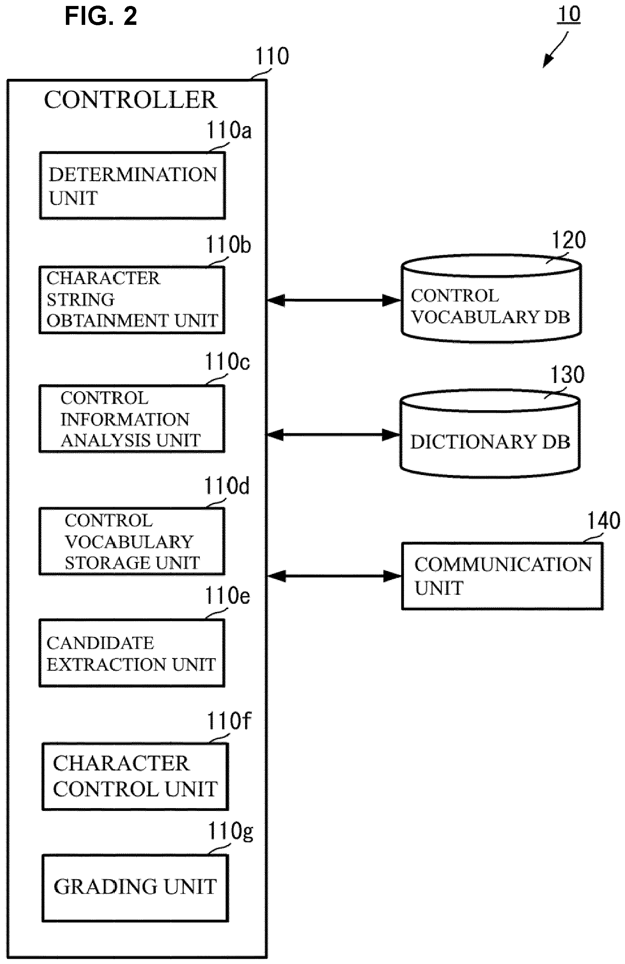

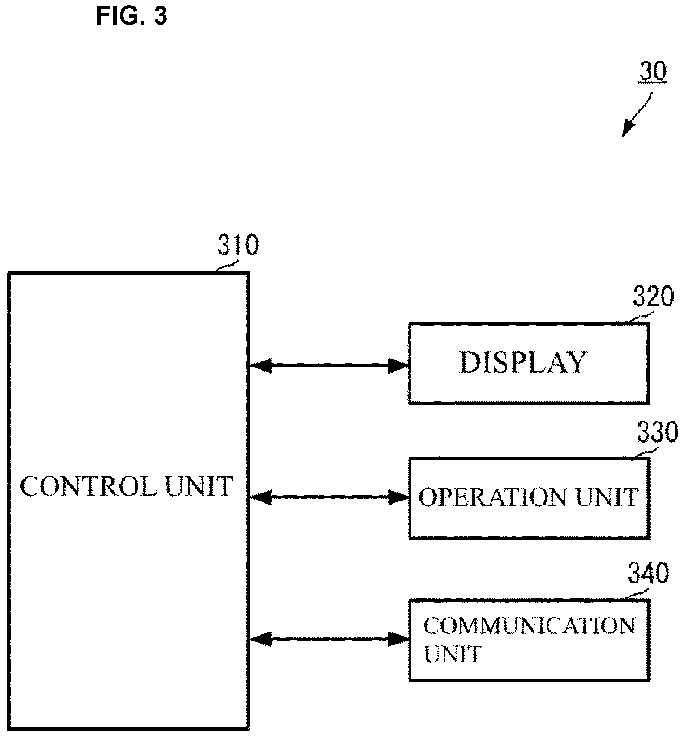

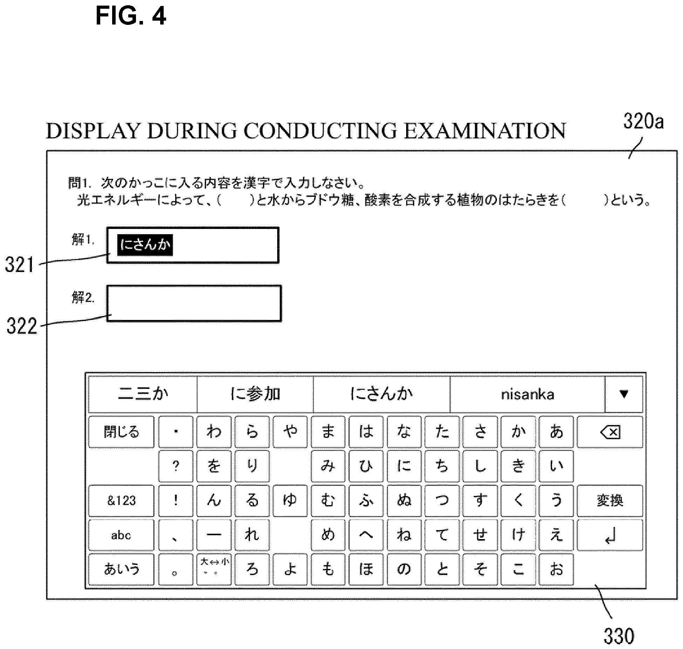

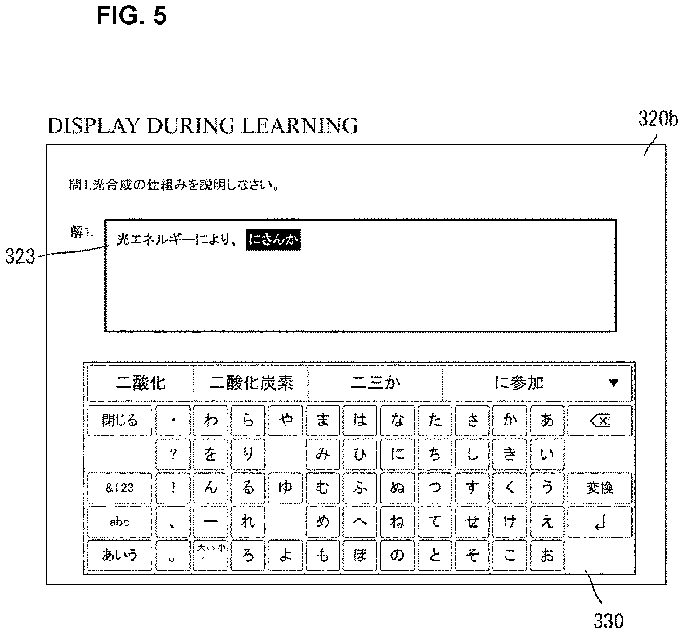

FIG. 2 is a block diagram showing a configuration of the main parts of a server device in this example. FIG. 3 is a block diagram showing a configuration of the main parts of a user terminal in this example. FIGS. 4 and 5 are image diagrams of a display of the user terminal in this example.

A more specific configuration example will be described with reference to the above schematic diagram of FIG. 1 showing the network system using a digital teaching material, and the block diagrams shown in FIGS. 2 and 3.

First, the configuration of the server device 10 will be described with reference to FIG. 2. The server device 10 includes a controller 110, a control vocabulary database 120 (control vocabulary DB 120), a dictionary database 130 (dictionary DB 130), and a communication unit 140.

### Configuration of controller

The controller 110 controls the units of the main body of the server device 10. The controller 110 includes a determination unit 110a, a character string obtainment unit 110b, a control information analysis unit 110c, a control vocabulary storage unit 110d, a candidate extraction unit 110e, a character control unit 110f, and a grading unit 110g.

### Configuration of control vocabulary database

The control vocabulary database 120 is a database in which readings (kana characters notation), parts of speech, converted character strings (kana characters and Chinese characters notation), and the like that are obtained by analyzing text books and questions for an examination that are prepared by the creator of the questions and the exercises, and the answers to the questions (text data) are registered in association with one another. More specifically, the control vocabulary database 120 is a database that stores words that correspond to the questions and the exercises, extracted from the text data subjected to morphological analysis. The words that are stored in the control vocabulary database 120 constitute the control vocabulary. The control vocabulary database 120 corresponds to the control vocabulary storage unit according to the present invention.

The control vocabulary may be generated when the text data is registered in the server device 10, or may also be generated in real time using the text data related to an examination or an exercise when the examination or the exercise is distributed. Because the morphological analysis performed by the server device 10 is a known process, a detailed description thereof will be omitted.

The control vocabulary database 120 may categorize and store, for example, the control vocabularies according to the levels of questions or exercises (for example, for elementary school students, for junior high school students, or for university students), or the subjects (language arts, science, social studies). With this configuration, it is possible to generate indexes for searching the control vocabulary database 120. As a result, it is possible to construct a control vocabulary database 120 in which the control vocabular can be efficiently searched. Furthermore, by adding categorizes such as the correct answer rate of an examination or character strings that tend to be erroneously input, it is possible to provide a configuration for determining the state of an actual learning and the degree of understanding.

Here, values (flags, for example) for identifying the category classifications may be set in the words in the control vocabulary. As a result, it is possible to increase the search speed when searching the control vocabulary database 120, and it is also possible to easily perform a complicated search such as in a case where a question or an exercise extends over a plurality of categories.

The server device 10 generates, for example, a control vocabulary from text data related to " 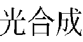 " (English translation: photosynthesis) of biology. The control vocabulary may include such words as " 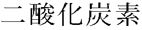 " (English translation: carbon dioxide), " 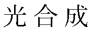 " (English translation: photosynthesis), " 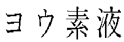 " (English translation: iodine solution), and " 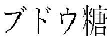 " (English translation: glucose).

### Configuration of dictionary database

The dictionary database 130 is a database in which readings (kana characters notation), parts of speech, converted character strings (kana characters and Chinese characters notation), and the like are registered in association with one another. The communication unit 140 performs data communication with the user terminals 30 connected via the network 20.

The control vocabulary database 120 and the dictionary database 130 may be, for example, storage media such as a hard disk drive (HDD) and a solid state drive (SSD), or may also be other storage media. Also, the control vocabulary database 120 and the dictionary database 130 may be constituted by a single storage medium whose storage area is divided.

### Detailed configuration of controller

The determination unit 110a determines whether the usage mode at that point in time is the examination mode in which a user answers questions for an examination, or a learning mode in which a user is learning. The determination unit 110a sets, for example, a control flag to on or off, depending on the usage mode, so that the usage mode can be determined based on the state of the control flag.

The character string obtainment unit 110b obtains the input character string received from the user terminal 30. The character string obtainment unit 110b outputs the input character string to the control information analysis unit 110c. In this example, the input character string is the reading of a word or phrase.

The control information analysis unit 110c performs morphological analysis of a textbook, questions for an examination prepared by the creator of the questions or the exercises, and the answers to the questions (text data). The control vocabulary storage unit 110d extracts, as a control vocabulary, a vocabulary (i.e. words) related to the questions for the examination and the exercises from the result of morphological analysis performed by the control information analysis unit 110c (the vocabulary extracted from the text data), and stores the extracted control vocabulary in the control vocabulary database 120.

The candidate extraction unit 110e searches the dictionary database 130 using an input character string. More specifically, the candidate extraction unit 110e searches the dictionary database 130 using the input character string as a key word, and extracts conversion candidates (regular conversion candidates and predictive conversion candidates). The candidate extraction unit 110e outputs the extracted conversion candidates to the character control unit 110f.

The character control unit 110f refers to the control vocabulary stored in the control vocabulary database 120, and obtains the control vocabulary from the extracted conversion candidates.

When the usage mode is the examination mode, the character control unit 110f excludes, from the conversion candidates, words in the control vocabulary that have been obtained from the conversion candidates and extracted as predictive conversion candidates. The character control unit 110f outputs, to the communication unit 140, conversion candidates that do not include the words in the control vocabulary extracted as predictive conversion candidates. The character control unit 110f corresponds to the output control unit according to the present invention.

In contrast, when the usage mode is the learning mode, the character control unit 110f increases the priority of the display of the words in the control vocabulary (i.e. the priority by which those words are displayed) obtained from the conversion candidates. At this time, the character control unit 110f increases the priority of the display of the words in the control vocabulary, regardless of whether or not the words in the control vocabulary are extracted as regular conversion candidates or predictive conversion candidates. The character control unit 110f outputs the conversion candidates to the communication unit 140.

When the usage mode is the examination mode, the grading unit 110g grades the answers for the examination that have been received from the user terminal 30, including whether the answers are correct or incorrect.

The controller 110 of the server device 10 is constituted by a hardware CPU, a memory, and other electronic circuits. When executing the character input program according to the present invention, the hardware CPU operates as the determination unit 110a, the character string obtainment unit 110b, the control information analysis unit 110c, the control vocabulary storage unit 110d, the candidate extraction unit 110e, the character control unit 110f, and the grading unit 110g. The memory has an area for developing the character input program according to the present invention, and an area for temporarily storing data and the like generated when the character input program is executed. The controller 110 may be an LSI (large-scale integrated circuit) in which the hardware CPU, the memory, and the like are integrated. The hardware CPU is a computer for executing the character input method according to the present invention.

Next, the configuration of the user terminal 30 will be described with reference to FIG. 3. The user terminal 30 includes a control unit 310, a display 320, an operation unit 330, and a communication unit 340. The user terminal 30 may be an ordinary personal computer, a tablet terminal, a smartphone, or the like.

The control unit 310 controls the operations of the units of the main body of the user terminal 30.

The display 320 displays a screen corresponding to the state of the main body of the user terminal 30. The operation unit 330 includes input devices such as a mouse, a keyboard (the keyboard may be a hardware keyboard or a software keyboard), and a touch panel. The operation unit 330 receives an input operation performed by a user on the user terminal 30. The communication unit 340 performs data communication with the server device 10 connected via the network 20.

The control unit 310 of the user terminal 30 is constituted by a hardware CPU, a memory, and other electronic circuits. The control unit 310 may be a CPU (integrated circuit) in which the hardware CPU, the memory, and the like are integrated.

An outline of the processing performed by the user terminal 30 will be described with reference to FIGS. 4 and 5. FIG. 4 shows what is displayed on the display 320a of the user terminal 30, when the user inputs an answer to a question for an examination. At this time, the usage mode is the examination mode.

The user terminal 30 displays the question for the examination distributed from the server device 10 on its display 320a. In FIG. 4, as the user terminal 30, a tablet terminal is shown. In this example, the operation unit 330 is a software keyboard. The control vocabulary is stored in the control vocabulary database 120.

The question for the examination displayed on the display 320a includes an input portion 321 and an input portion 322. The input portions 321 and 322 are answer fields for inputting the answer to the question. Their format for receiving the input, their size, and the number of input portions vary, depending on the questions distributed from the server device 10. The following is a translation of the question shown in Japanese in Fig. 4: "Question 1: Please fill in the blanks in the parentheses in the sentence below as kanji characters. The action of plants to synthesize glucose and oxygen from ( ) and water by light energy is called ( )."

FIG. 4 shows a state in which the user inputs " 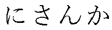 " to the input portion 321. The communication unit 340 of the user terminal 30 transmits, to the communication unit 140 of the server device 10, " 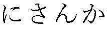 " as the input character string that has been input by the user.

The character string obtainment unit 110b receives the input character string " 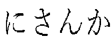 ", and outputs the input character string " 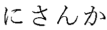 " to the candidate extraction unit 110e. The candidate extraction unit 110e searches the dictionary database 130 using the input character string " 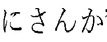 " as a key word, and extracts conversion candidates (regular conversion candidates and predictive conversion candidates). The candidate extraction unit 110e extracts, for example, " 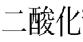 ", " 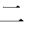 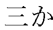 ", " 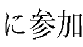 ", " 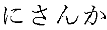 ", "nisanka" as regular conversion candidates, and extracts for example " 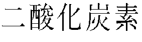 ", " 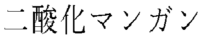 ", " 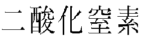 ", " 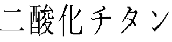 " as predictive conversion candidates. The candidate extraction unit 110e outputs the conversion candidates to the character control unit 110f.

The character control unit 110f compares the predictive conversion candidates with the words in the control vocabulary that have been retrieved from the control vocabulary database 120. The words in the control vocabulary are, for example, " 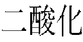 ", " 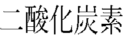 ", and " 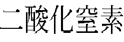 ". Because the usage mode is the examination mode, the character control unit 110f excludes the words in the control vocabulary from the predictive conversion candidates. As a result, the character control unit 110f outputs, as conversion candidates, for example " 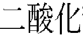 ", " 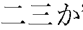 ", " 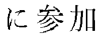 ", " 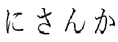 ", "nisanka", " 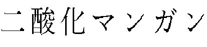 ", " 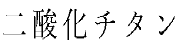 " to the communication unit 140.

In the control vocabulary database 120, " 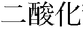 " is stored as a word in the control vocabulary, but " 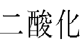 " is extracted as a regular conversion candidate. Accordingly, the character control unit 110f does not exclude " 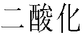 " from the conversion candidates to be output.

The communication unit 140 of the server device 10 transmits, to the user terminal 30, the conversion candidates " 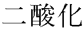 ", " 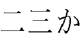 ", " 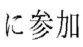 ", " 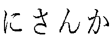 ", "nisanka", " 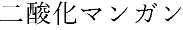 ", " 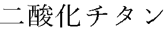 ". The user terminal 30 receives the conversion candidates through its communication unit 340.

The control unit 310 of the user terminal 30 displays the received conversion candidates on its display 320a. The displayed conversion candidates does not include " 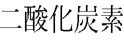 ", which the user considers to be the correct answer to the question. The user additionally inputs characters to the input portion 321. When the user has input " 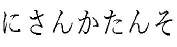 " to the input portion 321, the server device 10 performs the above-described processing, and transmits, to the user terminal 30, for example " 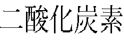 ", " 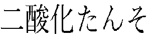 ", " 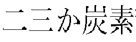 ", " 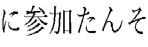 ", " 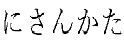 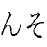 ", "nisankatanso" (the Japanese reading of all these words is the same; ni-sa-n-ka-ta-n-so) as the conversion candidates.

" 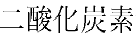 ", which the user considers to be the correct answer to the question, is displayed on the display 320a as a conversion candidate. The user selects " 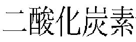 ", which the user considers to be the correct answer to the question, and finalizes the answer.

Upon receiving an input operation for transmitting the answer to the question, the user terminal 30 transmits the answer to the server device 10.

Upon receiving the answer to the question from the user terminal 30, the server device 10 inputs the received answer to the grading unit 110g.

The grading unit 110g grades, for each user terminal 30 (that is to say, for each of the users), whether the answer to the question received from the user terminal 30 is the correct answer or an incorrect answer.

Next, a case where the usage mode is the learning mode will be described with reference to FIG. 5.

The user terminal 30 displays a work assignment distributed from the server device 10 on its display 320a. In the example shown in FIG. 5, similarly to FIG. 4, the user terminal 30 is a tablet terminal, and the operation unit 330 is a software keyboard. The control vocabulary is stored in the control vocabulary database 120.

The work assignment that is displayed on the display 320b includes an input portion 323. In the input portion 323, the format for receiving the input, the size, and the number of input portions may vary, depending on the work assignment distributed from the server device 10.

FIG. 5 shows a state in which the user inputs " 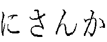 " to the input portion 323. The communication unit 340 of the user terminal 30 transmits, to the communication unit 140 of the server device 10, " 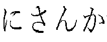 " that has been input by the user, as the input character string.

The character string obtainment unit 110b of the server device 10 receives the input character string " 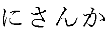 ". The character string obtainment unit 110b outputs the input character string " 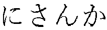 " to the candidate extraction unit 110e.

The candidate extraction unit 110e searches the dictionary database 130 using the character string " 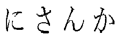 " as a key word, and extracts conversion candidates. The candidate extraction unit 110e outputs the conversion candidates to the character control unit 110f. In this case, the conversion candidates are, for example, " 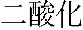 ", " 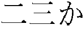 ", " 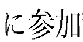 ", " 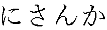 ", "nisanka", " 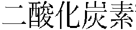 ", " 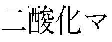 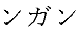 ", " 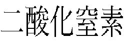 ", " 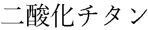 ", and the like.

The character control unit 110f compares the conversion candidates with the words in the control vocabulary that have been retrieved from the control vocabulary database. In this case, the words in the control vocabulary are the character strings " 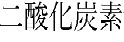 ", " 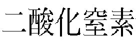 ", and " 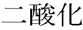 ". Because the usage mode at this point in time is the learning mode, the character control unit 110f increases the priority of the words in the control vocabulary, and increases the display rank of these words in the control vocabulary on the user terminal 30. As a result, the character control unit 110f outputs, to the communication unit 140, for example the character strings " 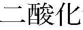 ", " 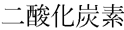 , " 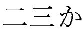 ", " 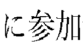 ", " 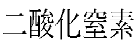 ", " 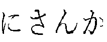 ", "nisanka", in that arrangement order as conversion candidates.

The communication unit 140 of the server device 10 transmits, to the user terminal 30, for example the conversion candidates; " 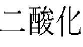 ", " 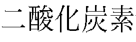 ", " 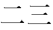 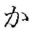 " " 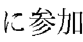 ", " 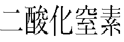 ", " 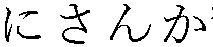 ", "nisanka". The user terminal 30 receives the conversion candidates through its communication unit 340.

The control unit 310 of the user terminal 30 displays the received conversion candidates on its display 320a. The displayed conversion candidates include the predictive conversion candidates. That is to say, even when a character string that the user intends to input is a word in the control vocabulary and is extracted as a predictive conversion candidate, the user can select the predictive conversion candidate.

### 3. Operation example

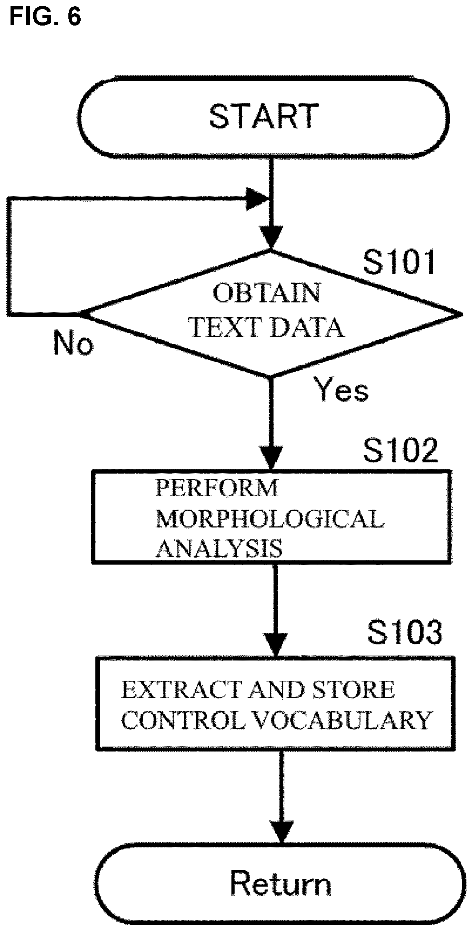

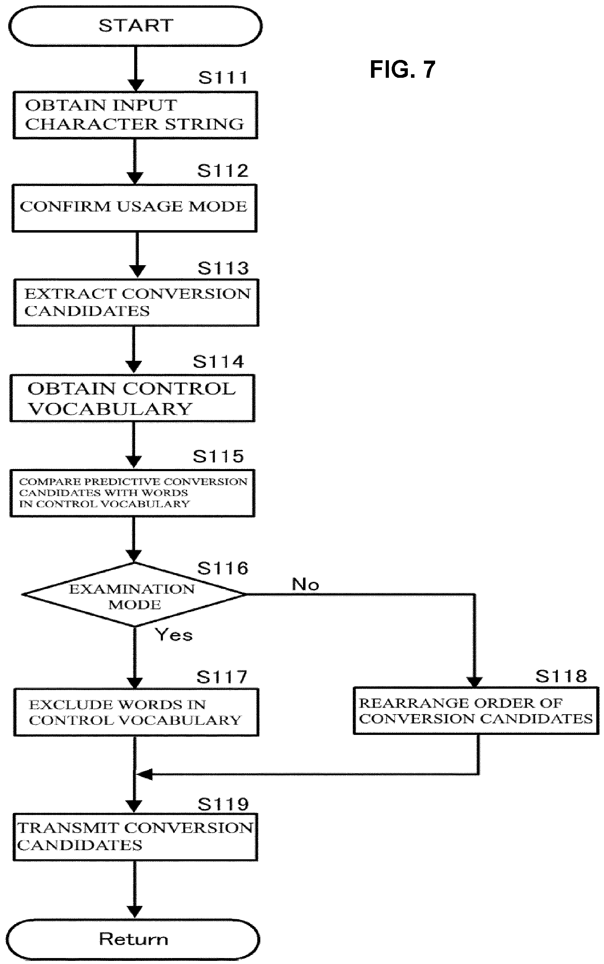

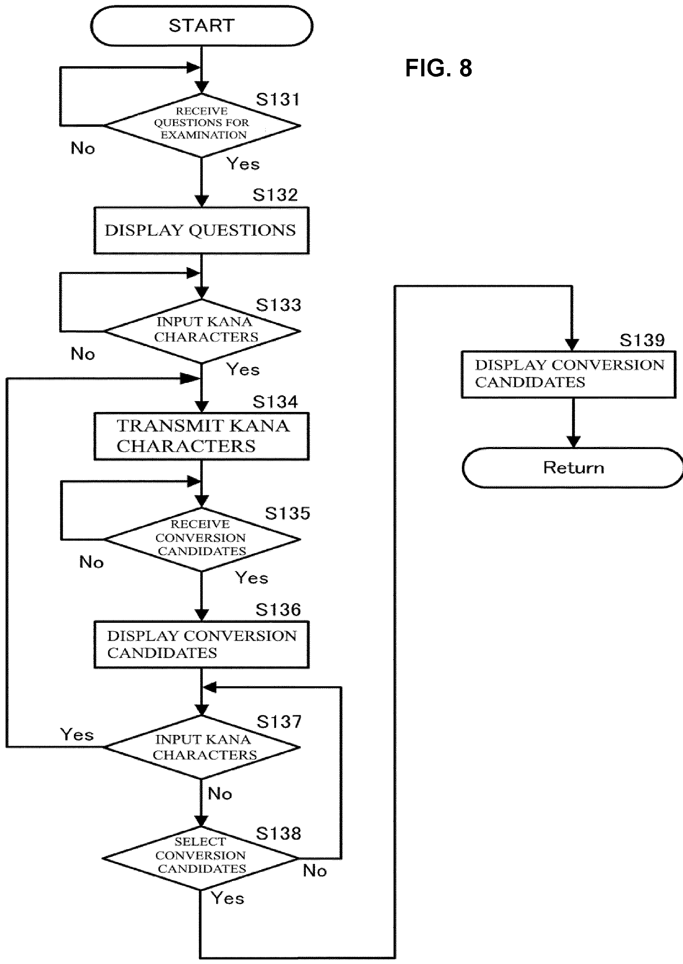

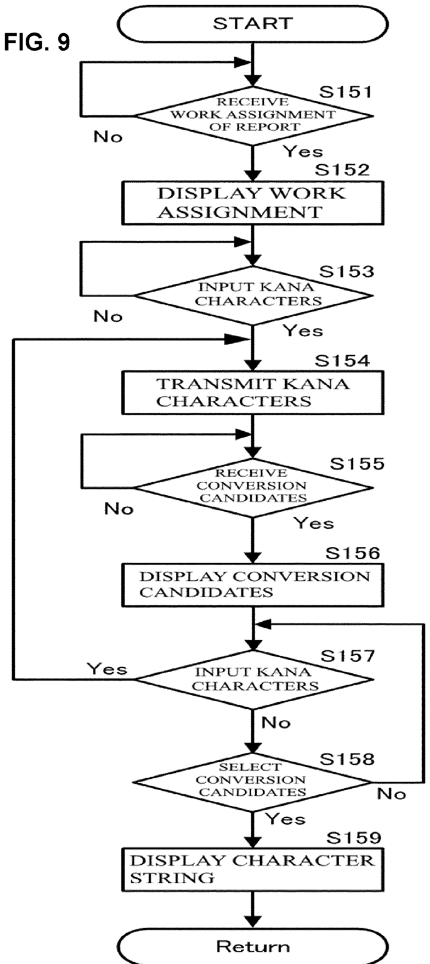

Hereinafter, operations of the server device 10 and the user terminal 30 when a user uses digital teaching material will be described. FIG. 6 is a flowchart showing the flow of generating control vocabulary. FIG. 7 is a flowchart showing the flow of processing in which the server device 10 generates and outputs conversion candidates. FIG. 8 is a flowchart showing the flow of processing when the user terminal in this example is in the examination mode. FIG. 9 is a flowchart showing the flow of processing when the user terminal in this example is in the learning mode.

First, the flow of generating control vocabulary will be described with reference to FIG. 6. This processing may be executed in advance, or may also be executed in real time when an examination or a work assignment is distributed to the user terminal 30, as long as a textbook, questions for the examination prepared by the creator of the questions and the work assignment, and/or the answers to the questions (hereinafter, these are collectively referred to as text data) are stored in the server device 10.

The control information analysis unit 110c of the server device 10 obtains text data (questions and exercises of digital teaching material) (step S101).

The control information analysis unit 110c performs a morphological analysis on the obtained text data (step S102).

The control information analysis unit 110c outputs the result of the morphological analysis to the control vocabulary storage unit 110d. The control vocabulary storage unit 110d extracts, as a control vocabulary, words that correspond to questions and/or exercises from the result of morphological analysis (words extracted from the text data), and stores the extracted words in the control vocabulary database 120 (step S103). At this time, flags based on categories or the like may be set in respective words in the control vocabulary. In this manner, it is possible to easily search for the words in the control vocabulary whose display are to be avoided as predictive conversion candidates. Here, "words that correspond to ..." may mean "words that are contained in ...".

Next, the flow of processing in which the server device 10 generates and outputs conversion candidates will be described with reference to FIG. 7. The character string obtainment unit 110b obtains an input character string from the user terminal 30 (step S111).

The determination unit 110a confirms the usage mode (step S112). More specifically, the determination unit 110a confirms whether the usage mode is the examination mode in which the user answers questions for an examination, or the learning mode in which the user is learning.

The candidate extraction unit 110e searches the dictionary database 130 using the input character string as a key word, and extracts conversion candidates (regular conversion candidates and predictive conversion candidates). The candidate extraction unit 110e outputs the conversion candidates to the character control unit 110f (step S113).

The character control unit 110f searches the control vocabulary database 120, and obtains the words in the control vocabulary (step S114).

The character control unit 110f compares the words in the control vocabulary with the predictive conversion candidates (step S115).

When the usage mode is the examination mode (Yes in step S116), the character control unit 110f excludes any words in the control vocabulary from the predictive conversion candidates (step S117).

In contrast, when the usage mode is the learning mode (No in step S116), the character control unit 110f increases the priority of the display of the words in the control vocabulary included in the conversion candidates, and rearranges the order of the words in the control vocabulary (step S118).

When the usage mode is the examination mode, the character control unit 110f transmits, to the user terminal 30, the predictive conversion candidates that includes no word in the control vocabulary, and the regular conversion candidates, as the conversion candidates. In contrast, when the usage mode is the learning mode, the character control unit 110f transmits, to the user terminal 30, the conversion candidates in which the priority of the display of the words in the control vocabulary is increased (step S119).

Note, that step S112 may be executed collectively in step S115.

Next, the flow of the processing in a case where an examination is performed with the user terminal 30 will be described with reference to FIG. 8. The user terminal 30 receives questions for an examination from the server device 10 (step S131).

The questions are displayed on the display 320 of the user terminal 30 (step S132).

The user operates the operation unit 330 of the user terminal 30, and inputs, character by character, the reading of a word that the user considers to be the correct answer to a question in the answer fields (the input portions 321 and 322) (S133).

When the user inputs one character, the user terminal 30 transmits, to the server device 10, the input character string that has been input at that point in time (step S134). When the user first inputs " 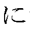 " in the answer field, for example, the user terminal 30 transmits the input character " 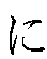 " to the server device 10. Then, when the user inputs " 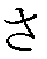 " after " 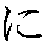 " in the answer field, the user terminal 30 transmits the input character string " 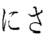 " to the server device 10.

The user terminal 30 receives conversion candidates that are the result of the server device 10 executing the processing shown in FIG. 7 (steps from S111 to S119) (step S135). The user terminal 30 displays the received conversion candidates on its display 320 (step S136).

When the user sees that the correct answer is not included among the conversion candidates displayed on the display 320, the user inputs an additional character to the answer field. In contrast, when the user sees that the correct answer is included among the conversion candidates displayed on the display 320, the user selects the right conversion candidate (i.e. the word or phrase that the user considers to be the correct answer to the question) using a mouse or a keyboard serving as an input device, or through a touch operation.

When an additional character is input to the answer field (step S137), the user terminal 30 returns to step S134 and repeats the above processing. When a conversion candidate displayed on its display 320 is selected (step S138), the user terminal 30 displays the selected conversion candidate in the answer field (that is to say, the user terminal 30 converts the input character string to the conversion candidate) (step S139), and returns to step S131.

As described above, in this example, even if words corresponding to the answers to questions for an examination are extracted as predictive conversion candidates, these words are not presented to the user. As a result, it is possible to conduct an examination capable of appropriately checking the degree of understanding of a user.

When the answer transmission key is operated by the user, the user terminal 30 transmits the answer to the question to the server device 10. The user terminal 30 may transmit an answer input to each answer field, or may also collectively transmit answers input to the answer fields.

The grading unit 110g that is included in the server device 10 grades whether the answer transmitted from the user terminal 30 is the correct answer or an incorrect answer. Then, the server device 10 transmits the grading result to the user terminal 30.

With this configuration, it is possible to perform the grading of an examination conducted for checking the degree of understanding of a user, without manual operation.

Next, the flow of processing in a case where a user performs leaning using the user terminal 30 will be described with reference to FIG. 9.

The user terminal 30 receives the work assignment of preparing a report from the server device 10 (step S151).

The work assignment is displayed on the display 320 of the user terminal 30 (step S152). The user operates the operation unit 330 of the user terminal 30, and inputs, character by character, the reading of a word, which the user intends to input, in the input portion 323 (step S153)

When the user inputs one character, the user terminal 30 transmits, to the server device 10, the input character string that has been input at that point in time (step S134). When the vocabulary that the user intends to input is " 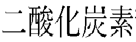 " (kana character notation is " 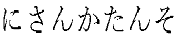 "), for example, the user first inputs " 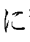 " to the input portion 323. The user terminal 30 transmits the input character " 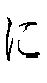 " to the server device 10. Then, when the user inputs " 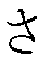 " after " 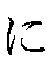 " in the input portion 323, the user terminal 30 transmits the input character string " 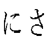 " to the server device 10.

The user terminal 30 receives conversion candidates that are the result of the server device 10 executing the processing shown in FIG. 7 (steps from S111 to S119) (step S155). The user terminal 30 displays the conversion candidates on its display 320 (step S156). Because the server device 10 increases the priority of the display order of the words in the control vocabulary, the user terminal 30 displays the words in the control vocabulary included in the conversion candidates at a relatively high rank (position).

When the user sees that there is no word that the user intends to input, among the conversion candidates displayed on the display 320, the user inputs an additional character to the input portion 323. In contrast, when the user sees that there is a word that the user intends to input, among the conversion candidates displayed on the display 320, the user selects the right word using a mouse or a keyboard serving as an input device, or through a touch operation.

When an additional character is input to the input portion 323 (step S157), the user terminal 30 returns to step S154 and repeats the above processing. When a conversion candidate displayed on its display 320 is selected (step S158), the user terminal 30 displays the selected conversion candidate in the input portion 323 (that is to say, the user terminal 30 converts the input character string to the selected conversion candidate) (step S159), and returns to step S151.

In this manner, when a work assignment for creating a report or the like is provided and a user is learning, the words in the control vocabulary are presented to the user as predictive conversion candidates. As a result, the complexity of inputting characters can be eliminated, and a user can efficiently perform learning and create a report as usual.

### 4. Modified examples

### Modified example 1

When registering control vocabulary in the control vocabulary database 120, the control vocabulary storage unit 110d of the server device 10 shown in the above example may also determine the display order of the words in the control vocabulary by performing weighting (calculating weights) using a subject, a language (Japanese, English, Chinese, or the like), and/or the statistical correct answer rate of a question. The subject, the language (Japanese, English, Chinese, or the like) and the statistical correct answer rate of the question correspond to the "type" of the present invention.

With this configuration, the display order of the predictive conversion candidates when the user is learning can be determined according to the learning environment.

### Modified example 2

In the above example, each time one character is input by the user, the user terminal 30 transmits the input character string at that point in time to the server device 10. However, for example, at the timing when the user operates the conversion key, the user terminal 30 may also transmit the input character string at that point in time to the server device 10.

### Modified example 3

The character input device according to the present invention can be applied not only to languages in which a user inputs a phonetic notation (reading (kana characters), pinyin) of a word that the user intends to input as a character string (for, example, Japanese), but also to languages in which a user inputs the spelling of a word that the user intends to input as a character string. This is explained below using English, which is a language in which a user inputs the spelling of a word that the user intends to input as a character string, as an example.

Also in the modified example 3, similarly to the above-described examples, the server device 10 and the user terminal 30 are connected to each other via the network 20 as shown in FIG. 1. The server device 10 according to the modified example 3 has the configuration shown in FIG. 2, and the user terminal 30 according to the modified example 3 has the configuration shown in FIG. 3.

In the modified example 3, the control vocabulary database 120 stores, for example, "carbon" and "dioxide" as words in the control vocabulary.

Here, for example, it is assumed that a character string (an input character string) that the user has input is "carb". When the server device 10 is in the examination mode, the server device 10 does not include "carbon", which is a word in the control vocabulary, among the conversion candidates to be transmitted to the user terminal 30, but transmits e.g. "carb", "carbs" and "carburetor" as the conversion candidates to the user terminal 30. In contrast, when the server device 10 is in the learning mode, the server device 10 includes "carbon", which is a word in the control vocabulary, in conversion candidates to be transmitted to the user terminal 30, and transmits "carbon", "carb", "carbs", "carburetor", and the like as the conversion candidates to the user terminal 30. At this time, the server device 10 increases the priority of "carbon", which is a word in the control vocabulary, and "carbon" is displayed at the highest position among the conversion candidates in the user terminal 30.

Similarly, it is assumed that a character string (an input character string) that the user has input is "dio". When the server device 10 is in the examination mode, the server device 10 does not include "dioxide", which is a word in the control vocabulary, among the conversion candidates to be transmitted to the user terminal 30, but transmits e.g. "diode" and "diocese" as the conversion candidates to the user terminal 30. In contrast, when the server device 10 is in the learning mode, the server device 10 includes "dioxide", which is a word in the control vocabulary, among the conversion candidates to be transmitted to the user terminal 30, and transmits e.g. "dioxide", "diode" and "diocese" as the conversion candidates to the user terminal 30. At this time, the server device 10 increases the priority of "dioxide", which is a word in the control vocabulary, and "dioxide" is displayed at the highest position among the conversion candidates in the user terminal 30.

The server device 10 according to the modified example 3 also executes the processing shown in FIGS. 6 and 7, similarly to the above-described examples. Furthermore, the user terminal 30 according to the modified example 3 also executes the processing shown in FIGS. 8 and 9, similarly to the above-described examples.

In the modified example 3, when "carbon" is stored in the control vocabulary database 120 as a word in the control vocabulary, derivative forms of "carbon" (for example, "carbonate") may also be stored in the control vocabulary database 120 as a word in the control vocabulary.

As described above, the character input device according to the present invention can conduct an examination capable of appropriately checking the degree of understanding of a user, without reducing efficiency of learning or report creation, even when the type of language in which the user inputs characters is English, as in the above-described example of Japanese.

In addition, in the above example, the character input device is configured such that the server device 10 and the user terminal 30 are separate devices connected via the network 20. However, the character input device may also be configured as a single device including the server device 10 and the user terminal 30.

The present invention is not limited to the above-described embodiments, and can be embodied by modifying constituent elements without departing from the scope of the invention in an implementation stage. In particular, the procedure of the operation processing in each unit is not limited to the above-described order, and the order may be changed as necessary. In addition, various inventions can be formed by appropriately combining a plurality of constituent elements disclosed in the above embodiments. Some constituent elements may also be excluded from all the constituent elements shown in the embodiments, for example. Furthermore, constituent elements in different embodiments may also be combined as appropriate.

The correspondence relationship between the configuration according to the present invention and the configurations according to the above-described embodiments can be described as the following supplementary note.

### Supplementary note

A character input device (10) including:
an extraction unit (110e) configured to extract candidates including predictive candidates that are predicted based on an input character string, as candidates corresponding to the input character string;
an output control unit (110f) configured to output the candidates extracted by the extraction unit in an arrangement order according to priority;
a control vocabulary storage unit (110d) configured to store a control vocabulary to be learned with teaching material; and
a determination unit (110a) configured to determine whether a usage mode is a first mode or a second mode,
wherein the output control unit (110f):
   excludes, from the candidates to be output, any words in the control vocabulary that have been extracted as predictive candidates, when the usage mode is the first mode, and
   increases, in the candidates to be output, the priority of any words in the control vocabulary that have been extracted by the extraction unit as predictive candidates, when the usage mode is the second mode.

### LIST OF REFERENCE NUMERALS

- 10: Server device
- 20: Network
- 30: User terminal
- 110: Controller
- 110a: Determination unit
- 110b: Character string obtainment unit
- 110c: Control information analysis unit
- 110d: Control vocabulary storage unit
- 110e: Candidate extraction unit
- 110f: Character control unit
- 110g: Grading unit
- 120: Control vocabulary database
- 130: Dictionary database
- 140: Communication unit
- 310: Control unit
- 320, 320a, 320b: Display
- 321, 322, 323: Input portion
- 330: Operation unit
- 340: Communication unit

## Claims

1. A character input device (10) comprising:
an extraction unit (110e) configured to extract candidates including predictive candidates that are predicted based on an input character string, as candidates corresponding to the input character string;
an output control unit (110f) configured to output the candidates extracted by the extraction unit (110e) in an arrangement order according to priority;
a control vocabulary storage unit (110d) configured to store a control vocabulary to be learned with teaching material; and
a determination unit (110a) configured to determine whether a usage mode is a first mode or a second mode,
wherein the output control unit (110f) is configured:
to exclude, from the candidates to be output, any words in the control vocabulary that have been extracted as predictive candidates, when the usage mode is the first mode, and
to increase, in the candidates to be output, the priority of any words in the control vocabulary that have been extracted by the extraction unit (110e) as predictive candidates, when the usage mode is the second mode.

2. The character input device (10) according to claim 1, further comprising:
a communication unit (140) configured to receive the input character string and transmit the predictive candidates.

3. The character input device (10) according to claim 1 or 2, further comprising:
a grading unit (110g) configured to grade an answer that has been input, when the usage mode is the first mode.

4. The character input device (10) according to any of claims 1 to 3,
wherein the output control unit (110f) is configured to calculate weights according to types of the words in the control vocabulary, and to determine the priority of the words in the control vocabulary extracted by the extraction unit (110e) as predictive candidates, in consideration of the weights.

5. The character input device (10) according to any of claims 1 to 4,
wherein the input character string is a kana-character string indicating the phonetic notation of the input character string.

6. A character input method in which an information processing device configured to store a control vocabulary to be learned with teaching material in a control vocabulary storage unit executes:
an extraction step of extracting candidates including predictive candidates that are predicted based on an input character string, as candidates corresponding to the input character string;
an output control step of outputting the candidates extracted in the extraction step in an arrangement order according to priority;
a determination step of determining whether a usage mode is a first mode or a second mode, and
the output control step comprises:
excluding, from the candidates to be output, any words in the control vocabulary extracted as predictive candidates, when the usage mode is the first mode, and
increasing, in the candidates to be output, priority of any words in the control vocabulary extracted in the extraction step as predictive candidates, when the usage mode is the second mode.

7. A character input program that causes an information processing device configured to store a control vocabulary to be learned with teaching material in a control vocabulary storage unit to execute:
an extraction step of extracting candidates including predictive candidates that are predicted based on an input character string, as candidates corresponding to the input character string;
an output control step of outputting the candidates extracted in the extraction step in an arrangement order according to priority;
a determination step of determining whether a usage mode is a first mode or a second mode, and
the output control step comprises:
excluding, from the candidates to be output, any words in the control vocabulary extracted as the predictive candidates, when the usage mode is the first mode, and
increasing, in the candidates to be output, priority of any words in the control vocabulary extracted in the extraction step as predictive candidates, when the usage mode is the second mode.
